# FASCICULE DE BREVET EUROPEEN

(11) **EP 0 816 749 B1**
(45) Date de publication et mention de la délivrance du brevet: **18.09.2002**
(21) Numéro de dépôt: 97401491.2
(22) Date de dépôt: 26.06.1997
(51) Int. Cl.: F21S 8/12, B60Q 1/00, B60Q 1/14, B60Q 1/068

(54) **Ensemble projecteur route/croisement combiné notamment pour véhicule automobile**
Fahrzeugscheinwerfer für Abblend- und Fernlicht
Motor vehicle headlamp for dipped and main beam

(30) Priorité: 27.06.1996 FR 9607997
(43) Date de publication de la demande: 07.01.1998
(73) Titulaire: VALEO VISION, 93000 Bobigny (FR)
(72) Inventeur: Montet, Maurice, 75018 Paris (FR)
(74) Mandataire: Le Forestier, Eric

(56) Documents cités:
- EP-A- 0 646 495
- DE-A- 19 540 554
- GB-A- 2 248 293
- US-A- 5 209 558

## Description

La présente invention concerne les projecteurs, notamment pour véhicules automobiles. Elle concerne plus précisément un ensemble projecteur route/croisement combiné, c'est-à-dire un ensemble susceptible d'émettre sélectivement un faisceau de croisement ou un faisceau de route.

Le FR-A-1 461 607 décrit un tel projecteur comportant un réflecteur mobile autour d'un axe horizontal perpendiculaire à son axe optique. Dans sa position basculée vers le bas, celui-ci procure un faisceau de croisement non éblouissant, tandis qu'un relèvement du miroir permet d'obtenir un faisceau de route de plus longue portée.

Ce projecteur connu présente cependant une mise en oeuvre inadaptée aux projecteurs modernes, notamment ceux pourvus de moyens de réglage d'orientation du faisceau en site et en azimut, que ces moyens soient manuels ou automatiques (dispositifs de correction manuelle de la position de référence du faisceau, ou bien dispositifs dits de "correction dynamique" permettant de compenser les variations d'assiette du véhicule).

Le EP-0 791 780 intitulé Projecteur de véhicule automobile, comportant une source lumineuse unique et susceptible d'émettre un faisceau de croisement et un faisceau de route, déposé au nom de la demanderesse, propose une structure particulière de projecteur permettant de résoudre ces difficultés. Le réflecteur y est monté sur trois points d'appui disposés aux trois sommets d'un triangle, et les moyens de commutation route/croisement comprennent un actionneur permettant de déplacer au moins l'un des trois points d'appui, les deux autres points d'appui étant reliés à des moyens de réglage en site et en azimut du réflecteur.

Cette demande propose également de renforcer en position de route l'éclairage du projecteur principal (mobile entre deux positions "route" et "croisement") par allumage d'un projecteur auxiliaire, procurant un faisceau étroit et concentré sur l'axe de la route et allumé uniquement lorsque le projecteur principal est en position de route.

La structure proposée par cette demande antérieure ne résout cependant pas le problème de l'ajustement de la position de référence du projecteur auxiliaire, des moyens d'ajustement spécifique en site et en azimut devant être prévus pour le réglage en site et en azimut de celui-ci.

On comprendra en outre que le dédoublement des systèmes de réglage complique, pour l'opérateur, la recherche d'une position de référence satisfaisante dans la position de faisceau de route, puisqu'il devra régler dans ce cas en site et en azimut à la fois le projecteur auxiliaire et le projecteur principal, les changements de réglage de ce dernier ayant au surplus une incidence en retour sur la position de référence du faisceau de croisement.

L'un des buts de la présente invention est de résoudre cette difficulté, en proposant une structure d'ensemble projecteur route/croisement combiné du type à basculement de réflecteur, à double projecteur (projecteur principal et projecteur auxiliaire de renforcement de faisceau de route) qui conserve néanmoins les avantages de simplicité de réglage, notamment de la position de référence, procurée par la structure du document précité EP-0 791 780.

L'ensemble projecteur route/croisement de l'invention est du type général décrit par cette demande précitée, c'est-à-dire qu'il comprend un premier projecteur avec un réflecteur principal monté sur trois points d'appui disposés aux trois sommets d'un premier triangle ; des moyens actionneurs, pour déplacer sélectivement en direction axiale au moins l'un des points d'appui de ce réflecteur principal entre deux positions, à savoir une première position correspondant à un faisceau de croisement et une seconde position correspondant à un faisceau de route ; et un second projecteur avec un réflecteur auxiliaire, apte à être allumé lorsque le faisceau émis par le premier projecteur est amené dans sa position de faisceau de route.

De façon caractéristique de l'invention, cet ensemble comprend : une platine commune recevant le premier projecteur et le second projecteur, cette platine étant elle-même montée sur trois points d'appui disposés aux trois sommets d'un second triangle ; des moyens de réglage, pour déplacer en direction axiale au moins certains des points d'appui de la platine de manière à ajuster l'orientation de cette dernière en site et en azimut ; les moyens actionneurs étant montés entre la platine et le réflecteur principal, de manière que ledit déplacement sélectif s'opère entre la première et la seconde position dans un référentiel lié à la platine ; et le réflecteur auxiliaire étant essentiellement fixe dans le référentiel de la platine.

Selon un certain nombre de formes de mise en oeuvre avantageuses :
- le premier triangle est un triangle rectangle, l'un des côtés de l'angle droit étant vertical et l'autre côté de l'angle droit étant horizontal, et les moyens actionneurs agissent sur le point d'appui du réflecteur principal situé au sommet de l'angle droit du premier triangle ;
- le second triangle est un triangle rectangle, l'un des côtés de l'angle droit étant vertical et l'autre côté de l'angle droit étant horizontal, et les moyens de réglage agissent sur les points d'appui de la platine situés aux deux extrémités de l'hypoténuse du second triangle ;
- le faisceau du projecteur principal est un faisceau avec une coupure en V qui, dans la première position, est centrée en azimut sur l'axe de la route, le faisceau du projecteur auxiliaire est un faisceau dont l'axe vertical principal est décalé en azimut par rapport à l'axe de la route, et le déplacement de la première à la seconde position produit un déplacement combiné du faisceau du projecteur principal, d'une part en site vers le haut, et d'autre part en azimut de manière à décentrer la coupure en V d'un décalage correspondant au décalage en azimut du faisceau du projecteur auxiliaire ;

Selon un autre aspect de l'invention, celle-ci concerne un jeu de deux ensembles projecteurs gauche et droit comprenant deux ensembles projecteurs combinés route/croisement tels que ci-dessus, où les sommets d'un des premiers triangles sont déduits de ceux de l'autre par translation horizontale, et où les sommets d'un des seconds triangles sont déduits de ceux de l'autre par symétrie par rapport à un plan axial.

Dans une variante de configuration du jeu d'ensembles projecteurs précédent, les sommets d'un des premiers triangles sont déduits de ceux de l'autre par translation horizontale, et les sommets d'un des seconds triangles sont déduits de ceux de l'autre par translation horizontale également.

D'autres caractéristiques et avantages de l'invention apparaîtront à la lecture de la description détaillée de l'invention qui va suivre, en référence aux dessins annexés.

La figure 1 est une vue de dessus, en coupe, de l'ensemble projecteur route/croisement de la présente invention.

La figure 2 illustre schématiquement, en vue de dos, la disposition des points d'appui respectifs des deux projecteurs de l'ensemble de la figure 1.

La figure 3 montre une première configuration possible du jeu d'ensembles projecteurs gauche et droit selon l'invention.

La figure 4 illustre une autre configuration du jeu d'ensembles projecteurs gauche et droit selon l'invention.

La figure 5 illustre la manière dont les faisceaux des projecteurs auxiliaire et principal sont combinés lorsque l'ensemble est commuté en position de faisceau de route.

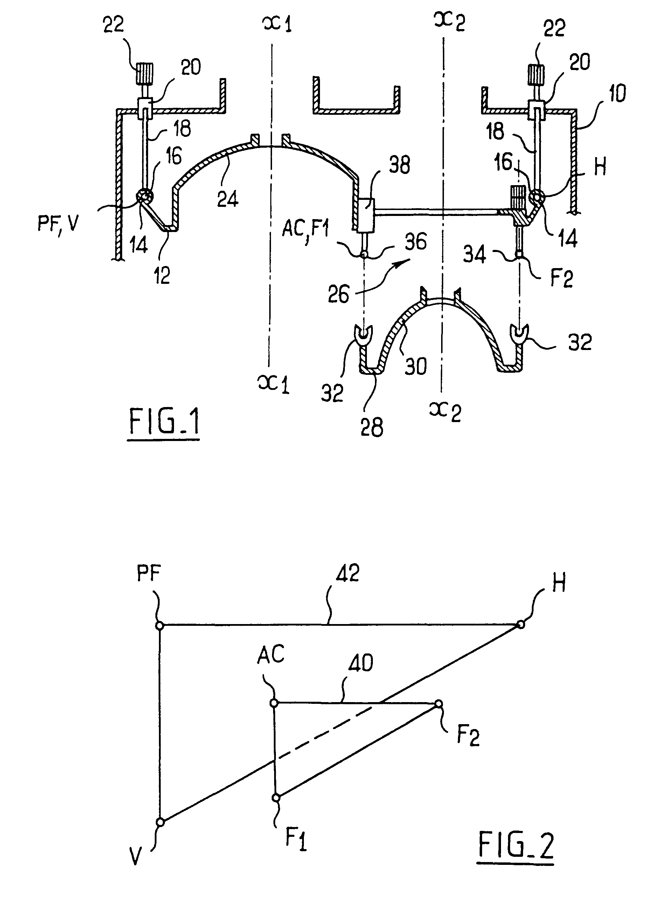

Sur la figure 1, on a illustré schématiquement, en vue de dessus, un bloc projecteur selon l'invention.

Celui-ci comprend, dans un boîtier 10 fermé par une glace (non représentée), une platine 12 reliée au boîtier 10 en trois points PF, V et H (dont deux, PF et V, sont vus superposés sur la figure 1) par une liaison articulée comprenant, en chaque point, une cage 14 solidaire de la platine et une rotule 16 solidaire d'une tige 18 reliée au boîtier 10 (on peut bien entendu envisager la configuration inverse, à savoir une cage solidaire de la tige 18 et une rotule solidaire de la platine 12).

Les trois points de liaison de la platine 12 au boîtier 10, que l'on appellera "points d'appui", sont disposés aux trois sommets d'un triangle rectangle, représenté de face figure 2, de façon à autoriser un ajustement de la position angulaire de la platine 12 par rapport au boîtier (et donc par rapport au véhicule), aussi bien en site, c'est-à-dire verticalement, qu'en azimut, c'est-à-dire horizontalement.

A cet effet, on trouve un point d'appui fixe PF, disposé à l'aplomb d'un point d'appui mobile V et à la même hauteur qu'un autre point d'appui mobile H. Les points d'appui mobiles V et H sont, comme illustré figure 1, reliés à une tige 18 qui est par exemple une tige filetée mobile dans un écrou 20 solidaire du boîtier 10, la tige portant un bouton moleté 22 accessible pour permettre le réglage de la position du bloc projecteur.

On comprendra que, grâce à cette configuration, une translation selon une direction axiale, c'est-à-dire perpendiculaire au plan de la feuille si l'on considère la figure 2, va permettre un réglage en site et en azimut du faisceau, respectivement par déplacements des points d'appui V et H.

On notera que la configuration de la figure 2, c'est-à-dire où le point V est situé plus bas que le point PF, n'est pas limitative, et que l'on pourrait très bien imaginer une autre configuration dans laquelle ce point V se trouve plus haut que le point PF, mais toujours à l'aplomb de celui-ci. De même, le point H a été représenté sur la figure 2 à droite du point PF, mais il pourrait également être situé à gauche. Enfin, la configuration en triangle rectangle dont les deux côtés de l'angle droit sont respectivement horizontal et vertical a été choisie pour sa simplicité (indépendance des réglages en site et en azimut), mais d'autres configurations du triplet de points d'appui peuvent être envisagées, bien que plus complexes à régler.

Si l'on revient à la figure 1, la platine 12 porte un premier projecteur comprenant un réflecteur 24 d'axe optique x1x1 qui, combiné à une lampe placée en son centre (non représentée), participe à la formation d'un faisceau de route, comme expliqué dans la suite.

La platine 12 porte également, disposée dans un logement 26, un autre projecteur 28 comportant un réflecteur 30 d'axe optique x2x2. À la différence du réflecteur 24 qui est fixe par rapport à la platine 12, le réflecteur 30 est un réflecteur mobile par rapport à cette même platine 12, et qui comporte à cet effet un triplet de points d'appui AC, F1, F2, chaque point d'appui comprenant une cage 32 combinée à une rotule telle que 34, 36 liée à la platine 12 (ici encore on peut avoir la configuration inverse, à savoir une rotule solidaire du réflecteur 30 et une cage liée à la platine).

Le triplet de points d'appui AC, F1, F2 est disposé comme illustré figure 2, c'est-à-dire avec une configuration de triangle rectangle ayant un côté horizontal (AC,F2) et un côté vertical (AC,F1).

Le point d'appui F2 (celui situé à l'extrémité du côté horizontal opposé à l'angle droit) est relié, comme illustré figure 1, à un dispositif de réglage manuel comprenant une tige filetée et un bouton moleté, de manière à permettre, par translation axiale de ce point d'appui F2, un réglage en azimut de la position du réflecteur 30 par rapport à la platine 12 (c'est-à-dire un déplacement dans le référentiel lié à cette platine).

Il en est éventuellement de même pour le point F1, pour permettre un réglage en site de la position du réflecteur 30 dans le référentiel lié à la platine 12.

Le point d'appui AC situé au sommet du triangle rectangle est, quant à lui, relié à un actionneur 38 fixe par rapport à la platine et susceptible de prendre en direction axiale au moins deux positions discrètes différentes, à savoir une première position correspondant à un faisceau de croisement et une seconde position, relevée sur l'horizontale par rapport à la précédente, correspondant à un faisceau de route.

Le réflecteur 30, combiné à la lampe (non représentée) placée en son centre, permet ainsi, par commande de l'actionneur 38 et donc déplacement du point d'appui AC, d'obtenir avec un seul et même projecteur soit un faisceau de route soit un faisceau de croisement, comme cela est décrit en détail dans la demande 96 02061 précitée. Compte tenu de son caractère polyvalent, on appellera ce projecteur "projecteur principal", le projecteur 24 qui n'a qu'une fonction d'appoint étant appelé, quant à lui, "projecteur auxiliaire".

Les réflecteurs 24 et 30 sont avantageusement des réflecteurs du type "miroir à surface complexe", c'est-à-dire qu'ils sont conçus pour engendrer le faisceau recherché sans recourir à des moyens d'occultation ; on pourra se référer aux brevets antérieurs au nom de la demanderesse sur ce sujet. Il est également préférable que les miroirs soient conçus, comme décrit également dans ces brevets antérieurs, pour engendrer un faisceau ayant la largeur requise sans qu'il soit nécessaire de recourir à des prismes ou à des stries d'étalement sur la glace de fermeture, qui peut donc être lisse ou très faiblement déviatrice.

L'actionneur 38 peut être de différents types, soit un servomoteur, soit un actionneur à deux positions tel qu'un électro-aimant, un moteur à couple bloqué ou un moteur pas-à-pas.

On comprendra que la commande de cet actionneur provoquera un léger basculement du réflecteur 30 autour de l'axe F1F2 et donc, par voie de conséquence, un déplacement de l'axe optique x2x2 du projecteur par rapport à sa position initiale. Typiquement, le passage de la position de croisement à la position de route implique un relèvement de l'ordre de 1,5 % vers le haut et un déplacement de l'ordre de 3 % vers la gauche (pour un sens de circulation à droite).

Outre les moyens de correction manuelle constitués par les ensembles à vis et à boutons moletés, le bloc projecteur de l'invention peut être pourvu éventuellement d'un dispositif dit de correction dynamique, en lui-même connu, situé de préférence entre le boîtier et la platine pour agir de façon globale et destiné à être commandé de façon automatique en fonction des variations d'assiette du véhicule, par exemple sur la base de signaux fournis par des capteurs au niveau des essieux, pour ajuster la hauteur de l'un ou l'autre des faisceaux en fonction de la charge du véhicule et/ou des changements d'assiette dus à l'état de la route.

Dans la configuration que l'on vient de décrire, on dispose donc de trois référentiels mobiles les uns par rapports aux autres, à savoir :
- un premier référentiel lié au réflecteur 30 du projecteur principal et à sa lampe (source lumineuse unique, solidaire du réflecteur 30),
- un deuxième référentiel lié à la platine 12 et au réflecteur 24 du projecteur auxiliaire et à sa lampe (source lumineuse unique, solidaire du réflecteur 24), et
- un troisième référentiel lié au boîtier 10 et donc au véhicule.

Ces trois référentiels sont liés entre eux de la manière suivante :
- le premier référentiel est lié au deuxième par l'intermédiaire de l'actionneur 38 (point d'appui AC) et des deux points d'appui F1 et F2, la position des points F1 et/ou F2 étant ajustable par des moyens de correction manuelle, et
- le deuxième référentiel est lié au troisième par les points PF, V et H, la position des points V et H étant ajustable par des moyens de correction manuelle, ou dynamique en particulier pour le point V.

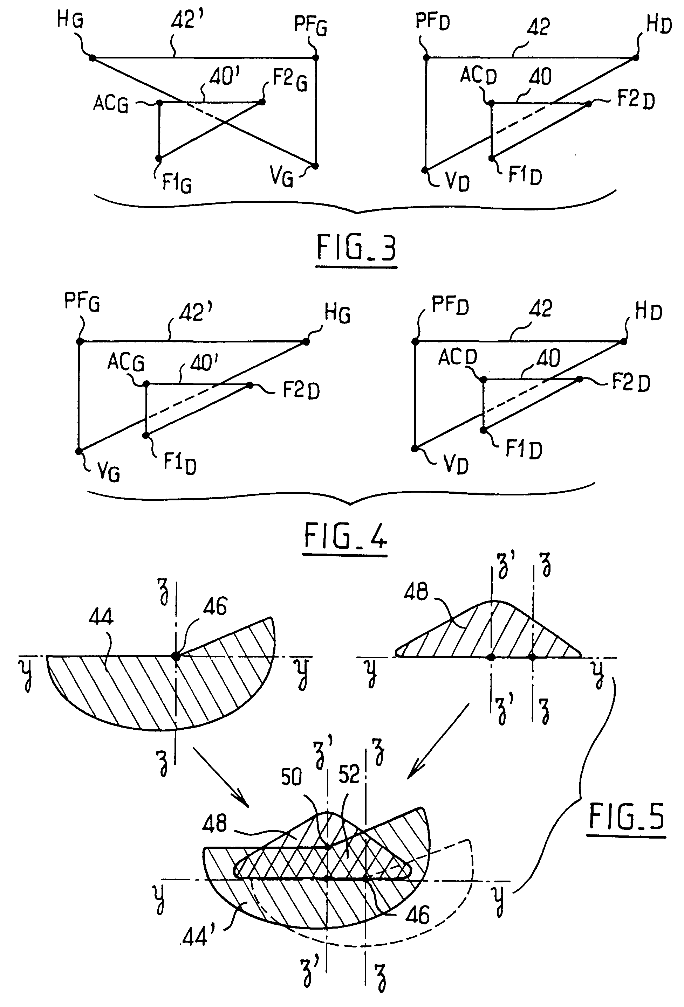

Le véhicule est équipé d'un jeu de deux ensembles projecteurs, gauche et droite semblables à celui que l'on vient de décrire, avec deux variantes possibles illustrées figure 3 et 4.

Dans la variante de la figure 3, les deux triplets de points d'appui PF, V et H des projecteurs droit et gauche, notés respectivement PFD, VD, HD d'une part et PFG, VG, HG d'autre part, sont symétriques par rapport au plan de symétrie de véhicule (triangles 42 et 42'), tandis que les deux triplets de points d'appui AC, F1 et F2, notés ACD, F1D, F2D d'une part et ACG, F1G, F2G d'autre part, sont déduits l'un de l'autre par translation horizontale (triangles 40 et 40').

Dans la variante de la figure 4, les triangles 40 et 40' sont semblables à ceux de la figure 3, mais les triangles 42 et 42', au lieu d'être symétriques, sont déduits l'un de l'autre par translation horizontale.

En tout état de cause, quelle que soit la variante, on aboutit à une configuration dans laquelle les triplets de points d'appui PF, H, V et AC, F1, F2 (triangles 42 et 40, respectivement) sont indépendamment mobiles pour chaque bloc projecteur, mais avec la particularité que la position du triplet AC, F1, F2 lié au projecteur principal (triangle 40) dépend de la position du triplet PF, H, V lié au projecteur auxiliaire (triangle 42).

La combinaison des faisceaux des deux projecteurs est illustrée sur la figure 5.

On a illustré en 44 le contour du faisceau projeté par le projecteur principal (réflecteur 30) sur un écran normalisé. On reconnaît le faisceau européen normalisé à coupure en V, avec - pour un sens de circulation à droite - une coupure à gauche horizontale et une coupure à droite relevée d'environ 15°. Le sommet du V est centré en 46 sur l'axe de la route, c'est-à-dire qu'il n'est ni décalé vers le haut ou vers le bas par rapport au plan horizontal (trace yy) incluant l'axe de la route, ni décalé vers la droite ou vers la gauche par rapport au plan vertical (trace zz) incluant l'axe de la route.

Lorsque l'actionneur est commandé en position de faisceau de route, le point 46 est déplacé en 50 (image du bas, figure 5), c'est-à-dire relevée d'environ 1,5 % vers le haut et décalée vers la gauche d'environ 3 %, le faisceau résultant 44' procurant ainsi une plus longue portée. En outre, en 44' l'axe zz est décalé vers la gauche, en z'z'.

Le projecteur auxiliaire (réflecteur 24), quant à lui, est éteint en position de croisement et allumé en position de route. Lorsqu'il est allumé, il produit le faisceau 48, qui est un faisceau procurant au-dessus de l'horizontale yy un maximum de lumière dans un axe z'z' décalé d'environ 3 % vers la gauche par rapport à l'axe zz de la route. Lorsque l'on superpose les faisceaux 44' et 48, comme illustré sur l'image du bas de la figure 5, on obtient une zone centrale 52 concentrant la lumière dans la région de vision du conducteur, procurant ainsi une portée maximale à l'ensemble projecteur.

L'intérêt de la structure selon l'invention réside dans la facilité de réglage de l'ensemble projecteur. En effet, il est possible d'agir simultanément sur les faisceaux 44' et 48 par ajustement des points d'appui V et H. Une fois cet ajustement réalisé, on commande l'actionneur pour revenir à la position de croisement et on procède à l'ajustement fin du faisceau de croisement 44 par action sur les points d'appui F1 et F2 de manière à centrer sur l'axe de la route le sommet 46 du V de la courbure du faisceau de croisement.

Le réglage de l'ensemble peut donc être effectué avec un minimum de manipulations et de façon simple et systématique pour l'obtention d'une photométrie optimale.

## Revendications

1. Un ensemble projecteur route/croisement combiné, notamment pour véhicule automobile, comprenant :
- un premier projecteur avec un réflecteur principal (30) monté sur trois points d'appui (AC, F1, F2) disposés aux trois sommets d'un premier triangle (40),
- des moyens actionneurs (38), pour déplacer sélectivement en direction axiale au moins l'un (AC) des points d'appui de ce réflecteur principal entre deux positions, à savoir une première position correspondant à un faisceau de croisement et une seconde position correspondant à un faisceau de route, et
- un second projecteur avec un réflecteur auxiliaire (24), apte à être allumé lorsque le faisceau émis par le premier projecteur est amené dans sa position de faisceau de route,
**caractérisé en ce qu'**il comprend :
- une platine commune (12) recevant le premier projecteur et le second projecteur, cette platine étant elle-même montée sur trois points d'appui (PF, V, H) disposés aux trois sommets d'un second triangle (42),
- des moyens de réglage (16-22), pour déplacer en direction axiale au moins certains (H, V) des points d'appui de la platine de manière à ajuster l'orientation de cette dernière en site et en azimut,
les moyens actionneurs étant montés entre la platine et le réflecteur principal, de manière que ledit déplacement sélectif s'opère entre la première et la seconde position dans un référentiel lié à la platine, et
le réflecteur auxiliaire étant essentiellement fixe dans le référentiel de la platine.

2. L'ensemble projecteur de la revendication 1, **caractérisé en ce que** le premier triangle (40) est un triangle rectangle, l'un des côtés de l'angle droit étant vertical et l'autre côté de l'angle droit étant horizontal, et les moyens actionneurs agissent sur le point d'appui (AC) du réflecteur principal situé au sommet de l'angle droit du premier triangle.

3. L'ensemble projecteur de la revendication 1, **caractérisé en ce que** le second triangle (42) est un triangle rectangle, l'un des côtés de l'angle droit étant vertical et l'autre côté de l'angle droit étant horizontal, et les moyens de réglage agissent sur les points d'appui (V, H) de la platine situés aux deux extrémités de l'hypoténuse du second triangle.

4. L'ensemble projecteur de la revendication 1, **caractérisé en ce que** :
- le faisceau du projecteur principal (44) est un faisceau avec une coupure en V qui, dans la première position, est centrée en azimut sur l'axe de la route (zz),
- le faisceau du projecteur auxiliaire (48) est un faisceau dont l'axe vertical principal (z'z') est décalé en azimut par rapport à l'axe de la route (zz), et
- le déplacement de la première à la seconde position produit un déplacement combiné du faisceau du projecteur principal, d'une part en site vers le haut, et d'autre part en azimut de manière à décentrer la coupure en V d'un décalage correspondant au décalage en azimut du faisceau du projecteur auxiliaire.

5. Un jeu de deux ensembles projecteurs gauche et droit, **caractérisé en ce qu'**il comprend deux ensembles projecteurs combinés route/croisement selon l'une des revendications précédentes, **en ce que** les sommets d'un des premiers triangles (40') sont déduits de ceux de l'autre (40) par translation horizontale, et **en ce que** les sommets d'un des seconds triangles (42') sont déduits de ceux de l'autre (42) par symétrie par rapport à un plan axial.

6. Un jeu de deux ensembles projecteurs gauche et droit, **caractérisé en ce qu'**il comprend deux ensembles projecteurs combinés route/croisement selon l'une des revendications 1 à 4, **en ce que** les sommets d'un des premiers triangles (40') sont déduits de ceux de l'autre (40) par translation horizontale, et **en ce que** les sommets d'un des seconds triangles (42') sont déduits de ceux de l'autre (42) par translation horizontale également.

## Patentansprüche

1. Eine Einheit aus kombiniertem Fernlicht- und Abblendlichtscheinwerfer, insbesondere für Kraftfahrzeuge mit
- einem ersten Scheinwerfer mit einem Hauptreflektor (30), der an drei Auflagepunkten (AC, F1, F2) montiert ist, die an den drei Spitzen eines ersten Dreiecks (40) angeordnet sind,
- Stellmitteln (38) zum selektiven axialen Verschieben zumindest eines (AC) der Auflagepunkte dieses Hauptreflektors zwischen zwei Positionen, und zwar zwischen einer ersten, einem Abblendlicht entsprechenden Stellung und einer zweiten, einem Fernlicht entsprechenden Stellung, und
- einem zweiten Scheinwerfer mit einem Zusatzreflektor (24), der eingeschaltet werden kann, wenn das von dem ersten Scheinwerfer ausgesandte Lichtbündel in seine Fernlichtstellung gebracht ist,
**dadurch gekennzeichnet, daß** sie folgendes umfaßt:
- eine gemeinsame Platte (12), die den ersten und den zweiten Scheinwerfer aufnimmt, wobei diese Platte selbst an drei Auflagepunkten (PF, V, H) montiert ist, die an den drei Spitzen eines zweiten Dreiecks (42) angeordnet sind,
- Verstellmittel (16-22) zum axialen Verschieben wenigstens einiger (H, V) der Auflagepunkte der Platte, um deren Höhenund Azimutaleinstellung zu regulieren,
wobei die Stellmittel zwischen der Platte und dem Hauptreflektor derart montiert sind, daß dieses selektive Verschieben zwischen der ersten und der zweiten Stellung innerhalb eines mit der Platte verbundenen Bezugssystems erfolgt, und wobei der Zusatzreflektor innerhalb des Bezugssystems der Platte im wesentlichen feststehend ist.

2. Scheinwerfereinheit nach Anspruch 1,
**dadurch gekennzeichnet, daß** das erste Dreieck (40) ein rechtwinkliges Dreieck ist, wobei eine der Seiten des rechten Winkels vertikal und die andere Seite des rechten Winkels horizontal ist, und die Stellmittel auf den an der Spitze des rechten Winkels des ersten Dreiecks gelegenen Auflagepunkt (AC) des Hauptreflektors wirken.

3. Scheinwerfereinheit nach Anspruch 1,
**dadurch gekennzeichnet, daß** das zweite Dreieck (42) ein rechtwinkliges Dreieck ist, wobei eine der Seiten des rechten Winkels vertikal und die andere Seite des rechten Winkels horizontal ist, und die Verstellmittel auf die an den beiden Enden der Hypotenuse des zweiten Dreiecks gelegenen Auflagepunkte (V, H) der Platte wirken

4. Scheinwerfereinheit nach Anspruch 1,
**dadurch gekennzeichnet, daß** das Lichtbündel des Hauptscheinwerfers (44) ein Lichtbündel mit einer V-förmigen Hell-Dunkel-Grenze ist, die in der ersten Stellung azimutal auf die Fahrbahnachse (zz) ausgerichtet ist, daß das Lichtbündel des Zusatzscheinwerfers (48) ein Lichtbündel ist, dessen senkrechte Hauptachse (z'z') bezüglich der Fahrbahnachse (zz) azimutal versetzt ist, und daß das Verschieben von der ersten in die zweite Stellung ein gleichzeitiges Verschieben des Lichtbündels des Hauptscheinwerfers zum einen in der Höhe nach oben und zum anderen azimutal bewirkt, so daß die V-förmige Hell-Dunkel-Grenze um ein Maß versetzt wird, das dem azimutalen Versatz des Lichtbündels des Zusatzscheinwerfers entspricht.

5. Ein Satz aus zwei Scheinwerfereinheiten für links und rechts,
**dadurch gekennzeichnet, daß** er zwei kombinierte Fernlicht- und Abblendlichtscheinwerfereinheiten nach einem der vorhergehenden Ansprüche umfaßt, daß die Spitzen eines der ersten Dreiecke (40') von denen des anderen Dreiecks (40) durch horizontale Translation abgeleitet werden und daß die Spitzen eines der zweiten Dreiecke (42') von denen des anderen Dreiecks (42) bezüglich einer axialen Ebene symmetrisch abgeleitet werden.

6. Ein Satz aus zwei Scheinwerfereinheiten für links und rechts,
**dadurch gekennzeichnet, daß** er zwei kombinierte Fernlicht- und Abblendlichtscheinwerfereinheiten nach einem der Ansprüche 1 bis 4 umfaßt, daß die Spitzen eines der ersten Dreiecke (40') von denen des anderen Dreiecks (40) durch horizontale Translation abgeleitet werden und daß die Spitzen eines zweiten Dreiecks (42') von denen des anderen Dreiecks (42) gleichfalls durch horizontale Translation abgeleitet werden.

## Claims

1. A combined main and dipped headlight assembly, in particular for a motor vehicle, the assembly comprising:
- a first headlight having a main reflector (30) mounted on three support points (AC, F1, F2) disposed at the three vertices of a first triangle (40);
- actuator means (38) for selectively moving at least one of the support points (AC) of said main reflector in an axial direction between two positions, namely a first position corresponding to a dipped beam and a second position corresponding to a main beam; and
- a second headlight with an auxiliary reflector (24) suitable for being switched on when the beam emitted by the first headlight is moved to its main beam position,
the assembly being **characterized in that** it further comprises:
- a common plate (12) receiving the first headlight and the second headlight, said plate itself being mounted on three support points (PF, V, H) placed at the three vertices of a second triangle (42);
- adjustment means (16-22) for moving at least some of the support points (H, V) of the plate in an axial direction so as to adjust the orientation of the support plate in elevation and in azimuth;
the actuator means being mounted between the plate and the main reflector so that said selective displacement takes place between the first and second positions in a frame of reference tied to the plate; and
the auxiliary reflector is essentially fixed in the frame of reference of the plate.

2. The headlight assembly of claim 1, characterpzed in that the first triangle (40) is a right-angled triangle, one of the sides of the right angle being vertical and the other side of the right angle being horizontal, and the actuator means act on the support point (AC) of the main reflector situated at the right-angled vertex of the first triangle.

3. The headlight assembly of claim 1, **characterized in that** the second triangle (42) is a right-angled triangle, one of the sides of the right angle being vertical and the other side of the right angle being horizontal, and the adjustment means act on the support points (V, H) of the plate that are situated at opposite ends of the hypotenuse of the second triangle.

4. The headlight assembly of claim 1, **characterized in that**:
- the beam of the main headlight (44) is a beam having a V-shaped cutoff which, in the first position, is centered in azimuth on the road axis (zz);
- the beam of the auxiliary headlight (48) is a beam whose main vertical axis (z'z') is offset in azimuth relative to the road axis (zz); and
- displacement of the first position to the second position causes combined displacement of the beam of the main headlight, firstly upwards in elevation and secondly in azimuth in such a manner as to shift the V-shaped cutoff off-center by an amount corresponding to the azimuth offset of the beam of the auxiliary headlight.

5. A left and right set of two headlight assemblies, **characterized in that** it comprises two combined main/dipped headlight assemblies according to any preceding claim, **in that** the vertices of one of the first triangles (40') are deduced from the vertices of the other triangle (40) by a shift in horizontal translation, and **in that** the vertices of one of the second triangles (42') are deduced from the vertices of the other second triangle (42) by symmetry about an axial plane.

6. A set of two left and right headlight assemblies, **characterized in that** it comprises two combined main/dipped headlight assemblies according to any one of claims 1 to 4, **in that** the vertices of one of the first triangles (40') are deduced from the vertices of the other first triangle (40) by a shift in horizontal translation, and **in that** the vertices of one of the second triangles (42') are deduced from the vertices of the other second triangle (42) likewise by a shift in horizontal translation.
